# EUROPÄISCHE PATENTSCHRIFT

(11) **EP 3 817 203 B1**
(45) Veröffentlichungstag und Bekanntmachung des Hinweises auf die Patenterteilung: **08.09.2021**
(21) Anmeldenummer: 19206001.0
(22) Anmeldetag: 29.10.2019
(51) Int. Cl.: H02K 11/33, H02K 5/18, H02K 5/22

(54) **LÖSBARE BEFESTIGUNG EINES FREQUENZUMRICHTERS AN EINEM ELEKTROMOTOR**
DETACHABLE FIXING OF A FREQUENCY CONVERTER TO AN ELECTRIC MOTOR
FIXATION DÉTACHABLE D'UN CONVERTISSEUR DE FRÉQUENCE SUR UN MOTEUR ÉLECTRIQUE

(43) Veröffentlichungstag der Anmeldung: 05.05.2021
(73) Patentinhaber: WILO SE, 44263 Dortmund (DE)
(72) Erfinder: Budy, Dominic, 44263 Dortmund (DE)
(74) Vertreter: Cohausz Hannig Borkowski Wißgott

(56) Entgegenhaltungen:
- EP-A1- 2 750 269
- WO-A1-2008/019818
- WO-A1-2016/074679
- DE-A1-102012 222 683
- DE-A1-102013 205 897
- FR-A1- 2 756 676

## Beschreibung

Die Erfindung betrifft eine Anordnung umfassend einen Frequenzumrichter und einen Elektromotor, auf dem der Frequenzumrichter in einer Fügerichtung montiert ist, und wenigstens ein Befestigungselement zur lösbaren Befestigung des Frequenzumrichters am Elektromotor.

Derartige Anordnungen sind hinlänglich bekannt, beispielsweise aus DE 102006023050 A1, DE 102007034915 A1 oder EP 2639940 A1. Weitere solcher Anordnungen sind aus FR 2756676 A1, DE 102012222683 A1, EP 2750269 A1, WO 2016/074679 A1 und WO 2008/019818 A1 bekannt.

Bei Frequenzumrichtern handelt es sich um vergleichsweise schwere Elektronikmodule zur Drehzahlstellung oder Drehzahlregelung des Elektromotors, deren Gehäuse mittels vier oder mehr Schrauben an dem Motorgehäuse des Elektromotor direkt oder mittels Haltevorrichtung befestigt werden, was zumeist bezogen auf die Motorachse radial erfolgt. Die Verschraubung erfolgt von oben, von den Seiten, von hinten oder von unten. Nach dem Ansetzen des Frequenzumrichters an den Elektromotor, muss der Frequenzumrichter in Position gehalten werden, bis alle Schaubbefestigungen angezogen sind. Dies nimmt einige Zeit in Anspruch und ist aufgrund des regelmäßig hohen Frequenzumrichtergewichts anstrengend, vor allem, wenn die Montage nicht liegend, sondern in hängender Montageposition, insbesondere bei vertikaler Motorachse erfolgen soll.

Obgleich die Montage des Frequenzumrichters beim Hersteller mit technischen Hilfsmitteln erfolgen kann, sind auch kundenseitige Wartungs- und Reparaturarbeiten zu berücksichtigen, bei denen eine Demontage und Widermontage des Frequenzumrichters erfolgen kann, was mangels technischer Hilfsmittel durch Muskelkraft erfolgen muss.

Zwischen Frequenzumrichter und Elektromotor besteht in der Regel eine elektrische Schnittstelle in Form einer Steckverbindung, für die eine entsprechende Ausrichtung des Frequenzumrichters relativ zum Elektromotor erforderlich ist. Führungselemente helfen zwar bei der Ausrichtung, jedoch muss dennoch ein Verkanten verhindert werden, um die Steckverbindung nicht zu beschädigen. Hierauf ist besonders während der Schraubbefestigung zu achten, während welcher der Frequenzumrichter richtig in Position gehalten werden muss.

Des Weiteren ist zu berücksichtigen, dass die Schraubbefestigung am Verwendungsort des Elektromotors meist schlecht zugänglich ist und/ oder nur geringer Bewegungsspielraum für den Servicetechniker besteht, weil andere Apparaturen, wie z.B. andere Pumpenaggregate, Rohre oder Ventile, oder Wände neben dem Elektromotor sind. Die erschwerte Zugänglichkeit der Schrauben führt zu längeren Servicezeiten bei Wartungs- und Reparaturarbeiten. Beispielsweise sind bei Doppelpumpen oder Multistage-Produkten die Frequenzumrichter so nah zusammen, dass bei einem Tausch eines Umrichters der andere Umrichter vorher abgenommen werden muss damit man an die Schrauben des einen Umrichters erreicht. Gegebenenfalls sind auch diverse Einbauten und Verrohrungen im Weg und lassen einen Servicefall sehr aufwendig werden. Schließlich ist auch anzumerken, dass die Befestigungsschrauben nach der Demontage schnell abhandenkommen und bei der Wiedermontage leicht herunterfallen können, was eine unerfreuliche Suche erforderlich macht.

Betrachtet man zudem auch die von dem Elektromotor angetriebene Lastmaschine, die beispielsweise eine Kreiselpumpe ist, ist häufig die Demontage des Frequenzumrichters aufgrund der Unzugänglichkeit der Befestigungsschrauben nicht möglich bzw. erfordert die vorherige Trennung von Elektromotor und Lastmaschine oder eine vorherige Teildemontage der Lastmaschine.

Aufgabe der vorliegenden Erfindung ist es, die Montage eines Frequenzumrichters auf bzw. an einem Elektromotor zu vereinfachen.

Diese Aufgabe wird durch den Gegenstand des Anspruchs 1 gelöst. Vorteilhafte Weiterbildungen sind in den Unteransprüchen angegeben und werden nachfolgend erläutert.

Erfindungsgemäß wird eine Anordnung umfassend einen Frequenzumrichter und einen Elektromotor, auf dem der Frequenzumrichter in einer Fügerichtung montiert ist, und wenigstens ein Befestigungselement zur lösbaren Befestigung des Frequenzumrichters am Elektromotor vorgeschlagen, bei der das Befestigungselement ein zwischen dem Frequenzumrichter und dem Gehäuseträger liegendes Verriegelungselement mit wenigstens zwei räumlich voneinander getrennten Verriegelungsabschnitten ist, wobei das Verriegelungselement mitsamt der Verriegelungsabschnitte in einer Ebene quer zur Fügerichtung von einer Freigabeposition, die eine das Fügen ermöglichende unverriegelnden Position ist, in eine Verriegelungsposition bewegbar ist, in der die Verriegelungsabschnitte den Frequenzumrichter am Elektromotor halten. Infolge dieser Halterung kann der Frequenzumrichter nicht mehr von dem Elektromotor abgenommenen werden.

Entgegen der üblichen Schraubbefestigung eines Frequenzumrichters an einem Elektromotor mittels vier oder mehr Schrauben verwendet die erfindungsgemäße Anordnung ein einziges Verriegelungselement, obgleich es auch zwei oder mehr sein können, um den Frequenzumrichter fest am Elektromotor zu halten. Dies ist dadurch bedingt, dass die Erfindung keine Schraubbefestigung des Frequenzumrichters an dem Elektromotor, sondern deren Verriegelung relativ zueinander zum Gegenstand hat, und weil die Bewegung des Verriegelungselements eine Verriegelung an zwei oder mehr Stellen gleichzeitig bewirkt, da alle Verriegelungsabschnitte gleichzeitig bewegt werden.

Die Befestigung des Frequenzumrichters am Elektromotor bei der Endmontage im Herstellerwerk sowie kundenseitig bei etwaigen Wartungs- und/ oder Reparaturarbeiten ist dadurch besonders einfach. Zudem ist die Montagezeit gegenüber dem Stand der Technik verkürzt. Gleiches gilt für die Demontage, bei der lediglich das Verriegelungselement von der Verriegelungsposition in die Freigabeposition zurückbewegt werden muss. Somit wird auch die Servicezeit bei der Wartung und Reparatur des aus Frequenzumrichter und Elektromotor gebildeten Antriebsaggregats beim Kunden deutlich verkürzt und spart somit Kosten.

Die Anwendung der Erfindung kann bei jeder Art von Elektromotoren erfolgen, an deren Gehäuse bestimmungsgemäß eine den Motor in seiner Drehzahl steuernde oder regelnde Elektronik zu montieren ist. Der Frequenzumrichter bildet insoweit diese Drehzahlsteuerung- oder -regelung des Elektromotors. Der Frequenzumrichter kann jedoch auch weitere Funktionen erfüllen, insbesondere weitere elektronische Funktionseinheiten enthalten, die im jeweiligen Anwendungsfall benötigt werden, z.B. eine Sensorik, eine Messwertaufbereitung und/ oder-Auswertung, kabelgebundene oder kabellose Kommunikationsmittel, elektrische oder optische Schnittstellen zur Datenübertragung, Anzeige- und/ oder Bedienelemente, und/ oder eine die angetriebene Lastmaschine betreffende Steuer- und Regelungsfunktionalität, z.B. eine Pumpenelektronik.

Eine besonders bevorzugte Anwendung der Erfindung liegt bei Anordnungen aus Frequenzumrichter und Elektromotor, die eine Kreiselpumpe in Trockenläuferbauweise antreiben, mit anderen Worten ein Trockenläufer sein. Bei derartigen Pumpen ist der Elektromotor trocken außerhalb der Pumpe angeordnet. Über eine Kupplung ist die Pumpenwelle mit der Motorwelle verbunden. In der Regel besitzen derartige Pumpenaggregate eine vergleichsweise hohe Leistung beispielsweise im Bereich mehrerer hundert Watt bis einige Kilowatt, so dass der Frequenzumrichter ein relativ hohes Gewicht hat, das mit der Leistung zunimmt. Oft ist der Frequenzumrichter bei derartigen Anordnungen radial zur Motorachse auf den Elektromotor gefügt, insbesondere radial außen auf das Motorgehäuse.

Die vorliegende Erfindung ist jedoch ebenso auf andere Elektromotoren übertragbar. Beispielsweise kann der Elektromotor eine Kreiselpumpe in Nassläuferbauweise, mit anderen Worten ein Nassläufer sein. Bei derartigen Aggregaten sind der Elektromotor und die Kreiselpumpe zu einer gemeinsamen Baueinheit vereinigt, wobei das Laufrad auf der Motorwelle sitzt. Der Rotor des Elektromotors dreht in einer Flüssigkeit, insbesondere in der Förderflüssigkeit, und der Rotorraum ist durch ein Spaltrohr vom Stator getrennt. In der Regel besitzen derartige Pumpenaggregate eine vergleichsweise geringe Leistung von weniger als hundert Watt beispielsweise im Bereich von wenigen Watt. Der Frequenzumrichter hat in diesem Fall zwar ein geringes Gewicht, jedoch vereinfacht der erfindungsgemäße Verriegelungsmechanismus auch in diesem Anwendungsfall die Montage. Oft ist der Frequenzumrichter bei derartigen Nassläufer-Anordnungen axial zur Motorachse auf den Elektromotor gefügt, insbesondere an eine axiale Stirnseite des Motorgehäuses gesetzt.

Ein wesentlicher Vorteil bei der Verwendung der Erfindung bei einem Nassläufer ist, dass die Nassläuferpumpe insgesamt erheblich kompakter gestaltet werden kann. Somit ergibt sich eine erhöhte Leistungsdichte, da weniger Schrauben benötigt werden. Denn jede Schraube, die durch das Elektronikgehäuse geführt werden muss bedeutet weniger Platz für die Platine und die elektronischen Bauteile. Zudem muss die Durchführung einer Schraube zum Nassläufermotor immer gedichtet werden. Die erfindungsgemäße Anordnung hat ferner den Vorteil, dass die Anzahl der zu montierenden Komponenten verringert wird, denn es werden nicht mehr vier oder mehr Befestigungsschrauben benötigt, bei denen in der Praxis stets das Risiko bestand, eine Schraube zu verlieren, weil sie herunterfällt oder verlegt wird.

Die Montage kann in einer vorteilhaften Ausführungsvariante weiter vereinfacht werden, indem das Verriegelungselement beweglich am Frequenzumrichter oder Elektromotor gehalten ist. Es bildet somit bei der Montage des Frequenzumrichters auf dem Elektromotor kein ebenfalls zu fügendes Einzelteil, sondern mit dem Frequenzumrichter oder dem Elektromotor eine vorgefertigte Baugruppe.

Erfindungsgemäß ist das Verriegelungselement über wenigstens zwei Führungsschrauben bewegbar gehalten, die sich jeweils durch eine längliche Ausnehmung im Verriegelungselement hindurcherstrecken und deren Köpfe das Verriegelungselement derart am Frequenzumrichter oder Elektromotor halten, dass es nur in der Ebene quer zur Fügerichtung bewegbar ist. Das Verriegelungselement ist somit relativ zu den Führungsschrauben bewegbar. Hierzu können die Führungsschrauben in entsprechenden Gewindebohrungen im Frequenzumrichter oder Elektromotor eingeschraubt sein.

Um eine stabile Lagerung der Verriegelungselemente zu erhalten, ist es vorteilhaft, drei oder vier Führungsschrauben zu verwenden. Zwar bedeutet die Verwendung der Führungsschrauben, dass, wie im Stand der Technik, Schrauben vorzusehen sind. Deren Verwendung erfolgt jedoch nicht bei der Endmontage, d.h. während der Halterung des schweren Frequenzumrichters am Elektromotor, sondern vielmehr in einem der Endmontage vorgelagerten Montageschritt, in dem die Gewindebohrungen leicht zugänglich ist und ausreichend Bewegungsfreiheit für Werkzeuge bei der Montage des Verriegelungselements besteht. Die Führungsschrauben beeinträchtigen somit nicht die Einfachheit Montage des Frequenzumrichters auf dem Elektromotor.

Vorzugsweise kann vorgesehen sein, dass die Führungsschrauben in eine oder jeweils eine Kühlrippe eingeschraubt sind. Somit kann der Frequenzumrichter auf seiner zum Elektromotor gerichteten Unterseite oder der Elektromotor auf seiner zum Frequenzumrichter gerichteten Oberseite Kühlrippen mit Doppelfunktion aufweisen, nämlich einerseits zur Abgabe von Wärme bzw. zur Kühlung der entsprechenden Komponente und andererseits zur Halterung des Verriegelungselements. Die Gewindebohrungen liegen dann innerhalb der entsprechenden Kühlrippe. Auf zusätzliche Befestigungsmittel und/oder Montagebereiche am Frequenzumrichter oder Elektromotor kann somit verzichtet werden.

In einem zur Erfindung nicht gehörenden Vergleichsbeispiel können anstelle von Führungsschrauben Hinterschnitte oder Nuten im Frequenzumrichter oder Elektromotor vorgesehen sein, in welche das Verriegelungselement formschlüssig eingreift und in welchen das Verriegelungselement verschieblich gehalten ist.

In einer vorteilhaften Ausführungsvariante kann das Verriegelungselement linear verschiebbar sein. Hierdurch wird eine besonders einfache Konstruktion des Verriegelungselements erreicht. Dieses Beispiel der Verriegelung ist translatorisch aufgebaut. Die länglichen Ausnehmungen können dann z.B. gerade Langlöcher sein, innerhalb derer die Führungsschrauben von einem Ende, das der Freigabeposition zugeordnet ist, zum anderen Ende, das der Verriegelungsposition zugeordnet ist, bewegt werden. Es ist allerdings in einer alternativen Ausführungsvariante auch eine rotatorische Verrieglung möglich, indem das Verriegelungselement drehbar ist und durch eine Schwenkbewegung von der Freigabeposition in die Verriegelungsposition gebracht wird. Eine solche Variante eignet sich besonders, wenn der Frequenzumrichter axial zur Motorachse gefügt wird, also insbesondere bei Nassläuferpumpen. Das Verriegelungselement kann in diesem Fall schwenkbar am Frequenzumrichter oder Elektromotor gehalten sein. Vorzugsweise können die länglichen Ausnehmungen entlang einer Kreisbahn gebogene Langlöcher sein.

Gemäß einer Ausführungsvariante kann das Verriegelungselement flach sein, vorzugsweise eine Platte bilden. Dies hat den Vorteil, dass das Verriegelungselement eine minimale Aufbauhöhe hat, so dass der Abstand zwischen dem Frequenzumrichter und dem Elektromotor nicht wesentlich vergrößert wird. Ideal ist es, wenn das Verriegelungselement ein Blech ist bzw. aus einem Blech hergestellt ist. Dies verleiht dem Verriegelungselement die nötige Stabilität.

Um die Steifigkeit des Verriegelungselements zu erhöhen, kann das Verriegelungselement zumindest bereichsweise eine reliefartige Struktur besitzen. Im Falle der Herstellung des Verriegelungselements aus einem Blech kann eine solche Struktur besonders einfach durch Druckumformen hergestellt werden. Beispielsweise können in bestimmten Abschnitten des Verriegelungselements Prägungen, insbesondere Sicken, vorhanden sein, und/ oder es könnten die Außenseiten einfach oder mehrfach gekantet sein.

In einer beispielhaften Ausführungsvariante sind die Verriegelungsabschnitte Vorsprünge, beispielsweise zungenartig, die sich quer zur Fügerichtung in Richtung von Halteabschnitten des Verbindungspartners erstrecken. Der Verbindungspartner ist entweder der Elektromotor, wenn das Verriegelungselement am Frequenzumrichter gehalten ist, oder der Frequenzumrichter, wenn das Verriegelungselement am Elektromotor gehalten ist. In der Verriegelungsposition liegen die Verriegelungsabschnitte in einer Flucht mit den Halteabschnitten und bilden somit einen Formschluss mit dem Verbindungspartner.

Es kann zusätzlich vorgesehen sein, dass die Verriegelungsabschnitte einen Kraftschluss bewirken. Dies kann in einer Ausführungsvariante dadurch erreicht werden, dass die Halteabschnitte jeweils eine zum entsprechenden Verriegelungsabschnitt gerichtete Abflachung aufweisen, welche bewirkt, dass der Verriegelungsabschnitt bei seiner Bewegung vom Halteelement quer zur Bewegungsrichtung federnd abgelenkt wird. Alternativ oder zusätzlich können die Verriegelungsabschnitte L-förmige Klemmabschnitte bilden, insbesondere Klemmzungen, die die Halteabschnitte hintergreifen, so dass der Frequenzumrichter und der Elektromotor kraftschlüssig aneinander gehalten bzw. zueinander gedrückt werden. Ist das Verriegelungselement an dem Frequenzumrichter gehalten, so sind die Halteabschnitte Teil des Elektromotors. Ist das Verriegelungselement an dem Elektromotor gehalten, so sind die Halteabschnitte Teil des Frequenzumrichters. In einer alternativen Ausführungsvariante kann vorgesehen sein, dass die Verriegelungsabschnitte ungewinkelt hervorstehen und in fluchtende Ausnehmungen von Elektromotor und Frequenzumrichter hineinragen, beispielsweise in der Art eines Bolzens.

Von besonderem Vorteil ist es, wenn der Elektromotor eine fest montierte, abnehmbare Montagebasis aufweist und die Verriegelungsabschnitte den Frequenzumrichter in der Verriegelungsposition an der Montagebasis halten. Somit ist die erfindungsgemäße Verriegelung unabhängig von dem Elektromotor selbst und kann somit unverändert für Elektromotoren unterschiedlicher Baugröße oder Leistungsklasse eingesetzt werden. Dies gewährleistet eine Modularität zwischen Frequenzumrichter und Elektromotor. Es ist lediglich die Montagebasis an die Schraubbefestigung des jeweiligen Elektromotortyps anzupassen, wohingegen die Anordnung der Halteabschnitte gleichbleibt. In einer alternativen Ausführungsvariante kann die Montagebasis mitsamt der Halteabschnitte einstückig mit dem Elektromotor sein, beispielsweise ein Gussteil mit dem Motorgehäuse bilden.

Vorzugsweise sind die Halteabschnitte Teil der Montagebasis und bilden Auflagepunkte für den Frequenzumrichter. Dies gewährleistet eine definierte feste Anlage des Frequenzumrichters am Elektromotor.

In einer Ausführungsvariante können die Halteabschnitte jeweils eine Vertiefung aufweisen, in der ein entsprechender Fuß des Frequenzumrichters aufgenommen ist.

Die Ausnehmungen dienen als Führung und gewährleisten eine korrekte Ausrichtung des Frequenzumrichters zum Elektromotor. Sie verhindern außerdem eine Verdrehung des Frequenzumrichters um die Fügeachse nach dessen Montage.

Obgleich das erfindungsgemäße Verriegelungselement wenigstens zwei räumlich voneinander getrennte Verriegelungsabschnitte aufweist, an denen die Halterung des Frequenzumrichters am Elektromotor erfolgt, ist es von Vorteil, wenn mehr als zwei Verriegelungsabschnitte in symmetrischer Anordnung vorhanden sind, damit der Frequenzumrichter in der Ebene stabil am Elektromotor anliegt und nicht etwa um eine Achse, auf der die beiden einzigen Verriegelungsabschnitte liegen, gekippt werden kann. Beispielsweise weist das Verriegelungselement drei oder vier symmetrisch angeordnete Verriegelungsabschnitte aufweist. Die Anordnung der Verriegelungsabschnitte korrespondiert sinnvollerweise mit der Anordnung der Halteabschnitte, die in selbiger Anzahl vorhanden sind, so dass jeder Verriegelungsabschnitt einen Halteabschnitt hinter- oder untergreift.

Damit sich das Verriegelungselement nicht aus der Verriegelungsposition löst, kann es mittels einer Arretierungsschraube fixierbar sein. Da das Verriegelungselement zwischen dem Frequenzumrichter und dem Elektromotor liegt, ist es schlecht zugänglich, um die Arretierungsschraube anzuziehen. Sofern der Frequenzumrichter das Verriegelungselement zudem an allen Seiten überragt, ist die Zugänglichkeit zusätzlich eingeschränkt. Es ist deshalb von Vorteil, wenn das Verriegelungselement an einer Stelle fixierbar ist, die beabstandet zu den Verriegelungsabschnitten liegt, so dass die Arretierungsschraube einfacher zugänglich ist. Hierzu kann das Verriegelungselement einen länglichen Befestigungssteg aufweisen, der an einem Ende mit einem Zentralabschnitt des Verriegelungselements verbunden ist, und dessen anderes Ende die Arretierungsschraube trägt. Das Verriegelungselement ist somit in dieser Ausführungsvariante am distalen Ende des Stegs fixierbar.

Um zu gewährleisten, dass die Arretierungsschraube in jeder Anwendungssituation zugänglich ist, kann das Ende des Befestigungsstegs sinnvollerweise an dem der Antriebsseite abgewandten Ende des Elektromotors liegen. Bei Trockenläufern ist an diesem Ende beispielsweise ein Lüfter angeordnet, der zur Wartung zugänglich sein muss. In der Regel liegen an dem der Antriebsseite abgewandten Ende des Elektromotors auch die Versorgungsanschlüsse des Elektromotors.

Idealerweise kann die Fixierung der Arretierungsschraube an einer Stirnseite einer Kühlrippe erfolgen. Somit muss keine besondere Montagefläche für die Arretierungsschraube vorgesehen werden. Allerdings kann die Befestigungskühlrippe, wenigstens am Befestigungsort der Arretierungsschraube, gegenüber den übrigen Kühlrippen dicker sein, um eine Gewindebohrung aufzunehmen, in der die Arretierungsschraube eingeschraubt werden kann.

Von besonderem Vorteil ist es, wenn sich die Arretierungsschraube in Richtung der Bewegungsrichtung des Verriegelungselements von der Freigabeposition in die Verriegelungsposition erstreckt. Denn dies bewirkt, dass das Verriegelungselement durch das Anziehen der Arretierungsschraube automatisch in die Verriegelungsposition bewegt bzw. gedrückt wird.

Es ist des Weiteren vorteilhaft, wenn das Verriegelungselement an derselben Komponente fixierbar ist, an der es beweglich gehalten ist, da in diesem Fall die Arretierungsschraube, obgleich bereits die Freigabeposition erreicht ist, nicht vollständig aus ihrer Gewindeaufnahme herausgedreht werden muss, um den Frequenzumrichter vom Elektromotor abnehmen zu können. Sie kann somit in einer teilweise eingeschraubten Position verbleiben, während der Frequenzumrichter abgenommen wird. Sofern das Verriegelungselement am Frequenzumrichter gehalten ist, kann somit auch dessen Fixierung am Frequenzumrichter, insbesondere einer seiner Kühlrippen erfolgen. Sofern das Verriegelungselement am Elektromotor gehalten ist, kann somit auch dessen Fixierung am Elektromotor, insbesondere einer seiner Kühlrippen erfolgen.

Idealerweise ist die Arretierungsschraube als unverlierbare Schraube am Verriegelungselement ausgebildet, so dass keine Gefahr besteht, dass die Arretierungsschraube bei zu weitem Herausdrehen vom Verriegelungselement herabfällt. Die Arretierungsschraube liegt in diesem Fall unabnehmbar in einer Öffnung des Verriegelungselements, insbesondere am Ende des Befestigungsstegs ein.

Vorzugsweise kann ein elektrischer Steckanschluss zwischen dem Frequenzumrichter und dem Elektromotor bestehen, durch den während des Fügens automatisch eine elektrische Verbindung zwischen dem Frequenzumrichter und dem Elektromotor hergestellt wird. Das Verriegelungselement kann diesen Steckanschluss in einer Ausführungsvariante umgeben, insbesondere vollständig. So kann sich der Steckanschluss beispielsweise durch eine zentrale Ausnehmung des Verriegelungselements hindurch erstrecken. Geeigneterweise weist das Verriegelungselement beidseits des Steckanschlusses jeweils zwei hintereinander liegende Verriegelungsabschnitte auf, so dass insgesamt vier Verriegelungsabschnitte vorliegen, die den Frequenzumrichter stabil am Elektromotor halten.

Vorzugsweise ist die erfindungsgemäße Anordnung derart ausgebildet, dass bei einer vertikalen Lage der Motorachse die Verriegelungsabschnitte auf den Halteabschnitten lagern, so dass das Gewicht des Verriegelungselements sowie des Frequenzumrichters zumindest teilweise auf den Halteabschnitten ruht. In der Ausführungsvariante des Verriegelungselements mit L-förmigen Klemmzungen hintergreifen diese die Halteabschnitte dann von oben, d.h. dass die Verriegelungsrichtung der Richtung der Gravitationskraft entspricht. Es besteht somit, anders als wenn die L-förmigen Klemmzungen die Halteabschnitte von unten hintergreifen würden, keine Gefahr, dass das Verriegelungselement in Richtung der Gravitationskraft nach unten aus der Verriegelungsposition rutscht.

Weitere Merkmale, Eigenschaften, Wirkungen und Vorteile der Erfindung werden nachfolgend anhand von Ausführungsbeispielen und der beigefügten Figuren erläutert.

Es sei darauf hingewiesen, dass im Rahmen der vorliegenden Beschreibung die Begriffe "aufweisen", "umfassen" oder "beinhalten" keinesfalls das Vorhandensein weiterer Merkmale ausschließen. Ferner schließt die Verwendung des unbestimmten Artikels bei einem Gegenstand nicht dessen Plural aus. Die bezüglich der Montage des Frequenzumrichters verwendeten Begriffe "an" und "auf" sind als Synonyme zu verstehen und deuten nicht eine bestimmte Ausrichtung oder Anordnung des Frequenzumrichters relativ zum Elektromotor bzw. relativ zur Umgebung, jedenfalls sofern nicht ausdrücklich auf eine bestimmte Bedeutung hingewiesen ist. Die Begriffe "oben", "unten", "übergreifen", "untergreifen" und "hintergreifen" sind stets in Bezug auf die jeweiligen Komponenten zueinander zu verstehen und nehmen keinen Bezug zur Anordnung im Raum.

Die Bezugszeichen behalten von einer zur anderen Figur ihre Bedeutung. Identische Bezugszeichen bezeichnen identische oder zumindest wirkungsgleiche Elemente. Es zeigen:
- Fig. 1:: eine Anordnung aus einem Elektromotorgehäuse und einem darauf zu befestigenden Gehäuse eines Frequenzumrichters mit einem ersten erfindungsgemäßen Verriegelungselement,
- Fig. 2:: die Anordnung nach Fig. 1 mit ihren einzelnen Elementen in Anlehnung an eine Explosionsdarstellung,
- Fig. 3:: eine Ansicht des Elektromotorgehäuses aus Fig. 1 von oben,
- Fig. 4:: eine 2-fach Ansicht des Frequenzumrichtergehäuses von unten, wobei die linke Ansicht die Verriegelungsposition und die rechte Ansicht die Freigabeposition des Verriegelungselements zeigt,
- Fig. 4a:: eine vergrößerte Ansicht des Ausschnitts X von Fig. 4, der einen Verriegelungsabschnitt zeigt,
- Fig. 4b:: eine vergrößerte Ansicht des Ausschnitts Y von Fig. 4, der eine Arretierungsschraube des Verriegelungselements zeigt,
- Fig. 5:: eine perspektivische Ansicht auf die Unterseite des montierten Frequenzumrichters mit befestigter Arretierungsschraube des Verriegelungselements,
- Fig. 6:: eine perspektivische Ansicht des Elektromotors mit Verriegelungselement ohne Frequenzumrichter,
- Fig. 7a:: eine Schnittdarstellung durch einen Verriegelungsabschnitt in Freigabeposition entlang des Schnitts B-B in Fig. 4a,
- Fig. 7b:: eine Schnittdarstellung durch einen Verriegelungsabschnitt in Verriegelungsposition.
- Fig. 8:: eine Anordnung aus einem Elektromotor und einem darauf zu befestigenden Frequenzumrichter mit einem zweiten erfindungsgemäßen Verriegelungselement,
- Fig. 9:: eine Ansicht des Elektromotors aus Fig. 8 von oben,
- Fig. 10:: eine perspektivische Ansicht des Elektromotors mit dem zweiten Verriegelungselement ohne Frequenzumrichter,
- Fig. 11a:: eine Schnittdarstellung durch einen Verriegelungsabschnitt bei montiertem Frequenzumrichter in Freigabeposition,
- Fig. 11b:: eine Schnittdarstellung durch einen Verriegelungsabschnitt bei montiertem Frequenzumrichter in Verriegelungsposition,
- Fig. 12:: eine perspektivische Ansicht auf die Unterseite des montierten Frequenzumrichters mit befestigter Arretierungsschraube des Verriegelungselements.

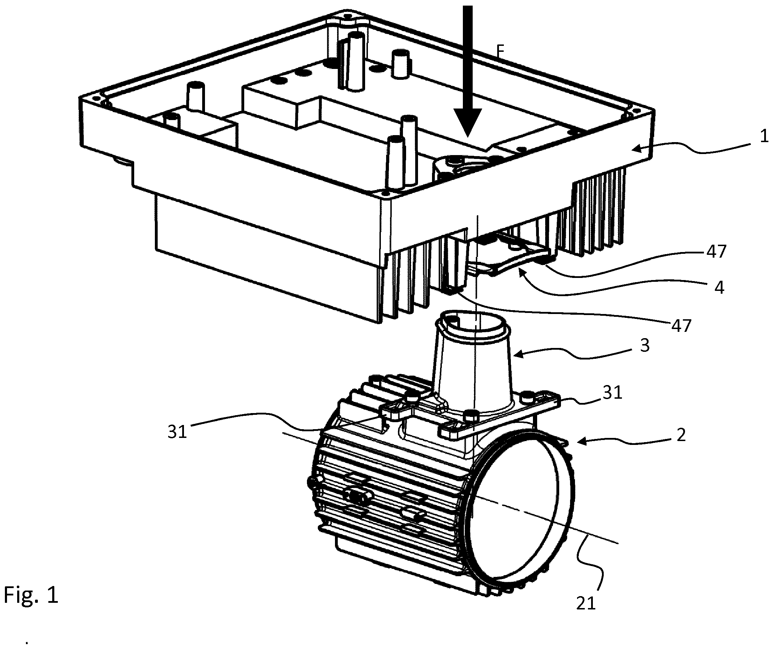

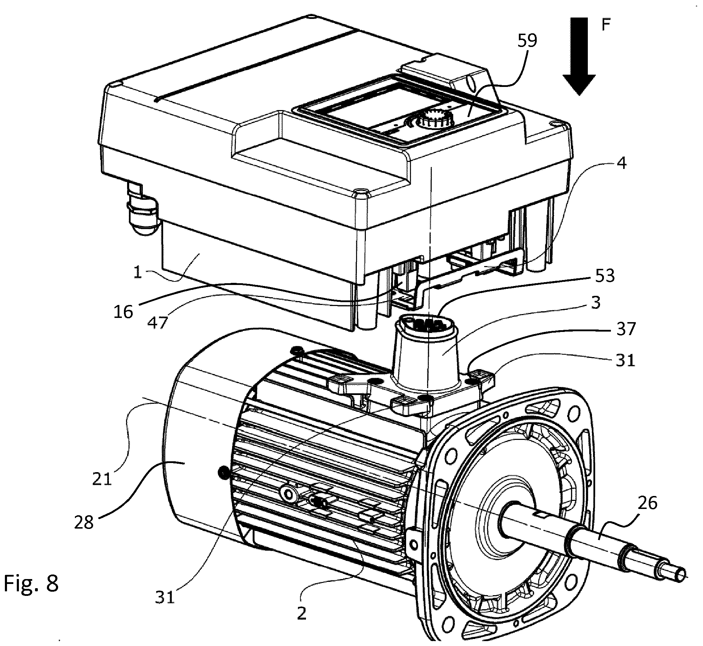

Figuren 1 bis 7b zeigen eine erste beispielhafte Ausführungsvariante einer Anordnung eines Frequenzumrichters 1 auf einem Elektromotor 2, der hier als Trockenläufer zum Antreiben einer Kreiselpumpe vorgesehen ist, wobei aus Gründen der Einfachheit nur die für das Verständnis der Erfindung relevanten Komponenten gezeigt sind, nämlich nur ein Gehäuseunterteil des Frequenzumrichters 1 und das Motorgehäuse des Elektromotors 2. Figuren 8 bis 12 zeigen eine zweite beispielhafte Ausführungsvariante einer Anordnung aus Frequenzumrichter 1 und Elektromotor 2.

Frequenzumrichter 1 sind im Stand der Technik hinlänglich bekannt. Sie dienen der Einstellung einer bestimmten Drehzahl bei einem dreiphasigen Elektromotor 2. Frequenzumrichter umfassen eine Elektronik, die in einem entsprechenden Gehäuse untergebracht ist, von dem in den Figuren 1 bis 7b lediglich ein Unterteil dargestellt ist. In klassischer Bauart umfasst ein Frequenzumrichter wenigstens einen mit einem Spannungsnetz starrer Frequenz verbundenen Gleichrichter, einen den Motor versorgenden Wechselrichter, auch Inverter genannt, einen zwischen Gleichrichter und Wechselrichter liegenden Gleichspannungszwischenkreis (DC-Link) mit wenigstens einem Kondensator zur Speicherung einer Gleichspannung, und eine Steuereinheit. Der Wechselrichter erzeugt mittels leistungselektronischen Bauelementen aus der Gleichspannung einer Wechselspannung einer beliebigen Frequenz, um die einzelnen Statorphasen zu bestromen. Die leistungselektronischen Bauelemente, z.B. Transistoren der Art MOSFET oder IGBT, werden von einer Steuereinheit angesteuert, um die Gleichspannung des Zwischenkreises gemäß einer bestimmten Modulationsart abwechselnd an die Statorphasen anzulegen, um eine bestimmte Drehzahl bei dem Elektromotor einzustellen, insbesondere zu regeln. Da die leistungselektronischen Bauelemente je nach Leistung des Elektromotors erhebliche Abwärme erzeugen können, müssen sie gekühlt werden. Dies erfolgt häufig und im vorliegenden Fall über das Gehäuse des Frequenzumrichters 1, welches dafür aus Metall, beispielsweise Aluminiumdruckguss hergestellt ist und Kühlrippen 11, 12, 13 aufweist, um die Abwärme abzugeben. Nicht nur die Elektronik, sondern auch das Metallgehäuse verleihen einem Frequenzumrichter 1 ein relativ hohes Gewicht.

Im Allgemeinen übernimmt ein Frequenzumrichter noch weitere Funktionen, insbesondere die Regelung und/oder Steuerung einer von dem Elektromotor angetriebenen Lastmaschine. Die Lastmaschine kann beispielsweise eine Kreiselpumpe sein, beispielsweise eine Trockenläuferpumpe. Zur Regelung und/oder Steuerung der Lastmaschine, insbesondere der Kreiselpumpe, kann der Frequenzumrichter weitere Funktionseinheiten aufweisen, insbesondere
- eine Systemsteuereinheit zusätzlich zu der Motorsteuereinheit, die der Motorsteuerung übergeordnete Aufgaben erledigt, welche das Gesamtaggregat insbesondere die Lastmaschine betreffen,
- einen oder mehrere Sensoren,
- eine Signalaufbereitung und -auswertung von Signalen interner und/ oder externer Sensoren,
- Kommunikationsschnittstellen (Funk oder kabelgebunden) zur Kommunikation mit externen Geräten, z.B. einer Leitstelle, und /oder
- eine Anzeige- und Bedieneinheit mit einer Anzeige zur Darstellung von Informationen über das aus Frequenzumrichter, Elektromotor und Lastmaschine gebildete Aggregat und Bedienelementen zur Vornahme von Einstellungen am Aggregat.

Die Montage des Frequenzumrichters 1 auf oder an dem Elektromotor 2 erfolgt in Fügerichtung F, die hier radial zur Motorachse 23 liegt. Die Befestigung erfolgt mittels eines zwischen Frequenzumrichter 1 und Elektromotor 2 liegenden Befestigungselements 4, das an der zum Elektromotor 2 gerichteten Unterseite 10 des Frequenzumrichters 1 verschiebbar gehalten ist, indem das Befestigungselement 4 nach dem radialen Fügen mit Verriegelungsabschnitten 47 hinter Halteabschnitte 31 einer Montagebasis 3 des Elektromotors 2 geschoben wird. Das Befestigungselement 4 ist hierfür mitsamt der Verriegelungsabschnitte 47 in einer Ebene quer zur Fügerichtung und parallel zur Motorachse 23 von einer Freigabeposition, die das axiale Fügen des Frequenzumrichters 1 mit dem Elektromotor 2 ermöglicht, in eine Verriegelungsposition bewegbar, in der die Verriegelungsabschnitte 47 den Frequenzumrichter 1 am Elektromotor 2 halten. Dies bewirkt ferner, dass der Frequenzumrichter 1 nicht mehr entgegen der Fügerichtung F abgenommen werden kann. Das Befestigungselement 4 bildet insoweit ein Verriegelungselement 4 und realisiert gemeinsam mit der Montagebasis 3 einen Verriegelungsmechanismus.

Um die Verbindung wieder zu lösen, wird das Verriegelungselement 4 von der Montagebasis 3 zurückgeschoben, bis die Verriegelungsabschnitte 47 die Halteabschnitte 31 freigeben bzw. in Fügerichtung F nicht mehr überlappen. Der Frequenzumrichter 1 kann dann vom Motorgehäuse abgenommen werden.

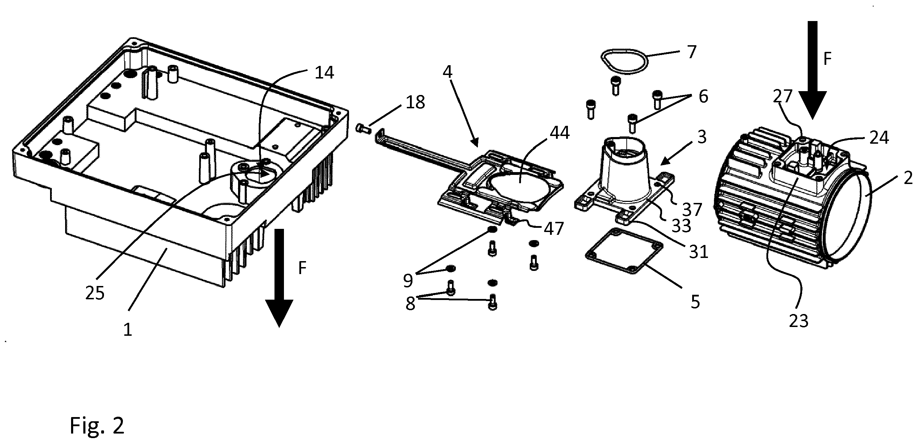

Figur 2 zeigt die verschiedenen Elemente zur Realisierung der erfindungsgemäßen Anordnung aus Frequenzumrichter 1 und Elektromotor 2. Die Anordnung umfasst als Hauptkomponenten
- den Frequenzumrichter 1, von dem auch hier nur das Unterteil des Gehäuses dargestellt ist,
- den Elektromotor 2, von dem hier nur das Motorgehäuse dargestellt ist,
- die Montagebasis 3, die in dieser Ausführungsvariante ein zum Motorgehäuse separates Teil bildet, d.h. von diesem abnehmbar ist,
- das Verriegelungselement 4, sowie
- vier Führungsschrauben 8, mit denen das Verriegelungselement 4 am Frequenzumrichter 1 gehalten ist und
- vier Motorschrauben 6, um die Montagebasis 3 am Gehäuse des Elektromotors 2 zu befestigen.
Unterlegschreiben 9 sind zwischen den Führungsschrauben 8 und dem Verriegelungselement 4 vorgesehen, um die Anlagefläche zwischen Führungsschraube 8 und Verriegelungselement 4 gegenüber einem Kopf 55 der jeweiligen Führungsschraube 8 zu vergrößern. Des Weiteren ist zwischen der Montagebasis 3 und dem Elektromotor 2 eine Motordichtung 5 und zwischen der Montagebasis 3 und dem Frequenzumrichter 1 eine Gehäusedichtung 7 vorgesehen. Als weitere Komponente umfasst die erfindungsgemäße Anordnung eine Arretierungsschraube 18, um das Verriegelungselement 4 in der Verriegelungsposition zu fixieren.

Die Abnehmbarkeit der Montagebasis 3 hat den Vorteil, dass der erfindungsgemäße Verriegelungsmechanismus bei unterschiedlichen Elektromotoren, insbesondere verschiedener Leistungsklassen verwendet werden kann, die verschiedene Schraubenpositionen und folglich verschiedene Befestigungspunkte für konventionelle Frequenzumrichter haben, weshalb die Unterseite eines konventionellen Frequenzumrichters jeweils an die entsprechenden Schraubenpositionen angepasst sein muss. Dadurch, dass die Montagebasis 3 vom Motorgehäuse unabhängig ist, wird eine Modularität bezüglich des Elektromotors 2 erreicht, da der erfindungsgemäße Verriegelungsmechanismus nur zwischen Frequenzumrichter 1 und Montagebasis 3 wirkt. Der Verriegelungsmechanismus kann somit in stets identischer Form bei Elektromotoren mit unterschiedlichen Schraubbefestigungen verwendet werden, wobei lediglich die Befestigung der Montagebasis 3 an dem Motorgehäuse des Elektromotors 2 angepasst werden muss.

Wie Figur 2 zu erkennen gibt, weist die Montagebasis 3 eine Basisplatte 33 mit vier Bohrungen 37 auf, durch die sich die Motorschrauben 6 jeweils hindurcherstrecken, um in entsprechende Gewindebohrungen 27 am Elektromotor 2 aufgenommen zu werden. Die Basisplatte 33 hat hier beispielhaft eine rechteckige, nahezu quadratische Grundform und wird auf eine kastenförmige Erhebung 23 des Elektromotors 2 aufgesetzt, die die Wände eines Klemmenkastens des Elektromotors 2 bilden, der zum elektrischen Anschluss der Statorphasen dient.

Die Halteabschnitte 31, von denen beispielhaft vier vorhanden sind, bilden seitlich von der Basisplatte 33 abstehende Erweiterungen. Zwei Halteabschnitte 31 sind in axialer Richtung zueinander beanstandet und liegen in einer Flucht, was jedoch nicht unbedingt sein muss. Ferner liegen jeweils zwei Halteabschnitte 31 bezogen auf die Motorachse 21 symmetrisch gegenüber.

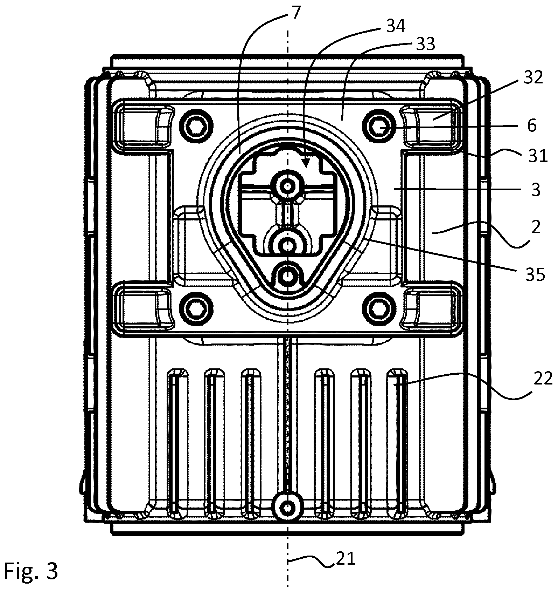

Wie in den Figuren 3 bis 7b deutlich wird, besitzt jeder Halteabschnitt eine Vertiefung 32 zur Aufnahme eines sockelartigen Fußes 16, der von der Unterseite 10 des Frequenzumrichters 1 absteht, um in jeweils einem Halteabschnitt 31 aufgenommen zu werden, so dass eine Anlagefläche 19 eines Fußes 16 am Boden der Vertiefung 32 des entsprechenden Halteabschnitts 31 aufliegt. Jeder Halteabschnitt 31 bildet insoweit einen Aufnahmesockel für den Frequenzumrichter 1.

Um den elektrischen Anschluss zwischen dem Frequenzumrichter 1 und dem Elektromotor 2 zu realisieren, sind Öffnungen 14, 24, 34, 44 in den verschiedenen Komponenten vorgesehen. So besitzt der Frequenzumrichter 1 eine Anschlussöffnung 14, die in das Innere des Frequenzumrichters 1 hineinführt. Der Elektromotor 2 weist eine Anschlussöffnung 44 auf, durch die die elektrischen Anschlüsse des Stators (Statorphasen) in den Klemmenkasten 23 geführt sind.

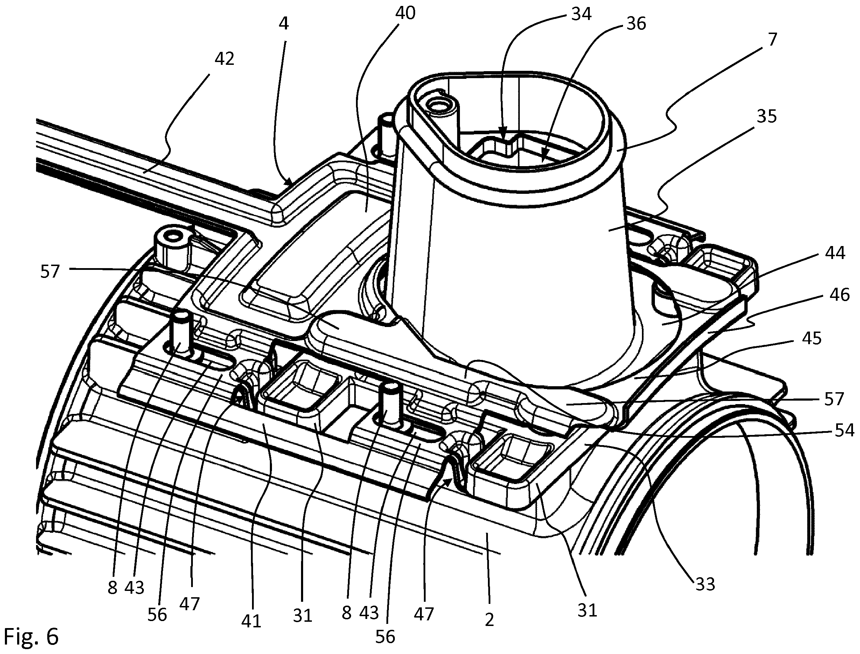

Um beim mechanischen Fügen sogleich die elektrische Verbindung zwischen Frequenzumrichter 1 und Elektromotor 2 herzustellen, existiert eine hier nicht dargestellte elektrische Schnittstelle in Form einer Steckverbindung umfassend einen Stecker, z.B. frequenzumrichterseitig, und eine Buchse, z.B. motorseitig. Die Steckverbindung liegt geschützt in einem beidseitig offenen Schacht 36 eines Doms 35, der sich von der Basisplatte 33 der Montagebasis 3 erhebt. Alternativ kann der Dom Teil des Frequenzumrichters sein. Von der Innenseite des Doms 35 springt eine Wand unter Freilassung einer konturierten Anschlussöffnung 34 radial hervor, vergleiche Figur 6, die die Steckverbindung in Position hält. Am frequenzumrichterseitigen Ende des Doms 35 liegt die Gehäusedichtung 7 außen auf, um eine dichtende Verbindung mit einer entsprechend gegenüberliegenden Innenwand 25 des Frequenzumrichters 1 zu bewirken, vergleiche Figur 2.

Figur 3 zeigt eine Ansicht des Elektromotors 2 von oben mit montierter Montagebasis 3. Die Befestigung der Montagebasis 3 erfolgt mittels der Motorschrauben symmetrisch zur Motorachse 21.

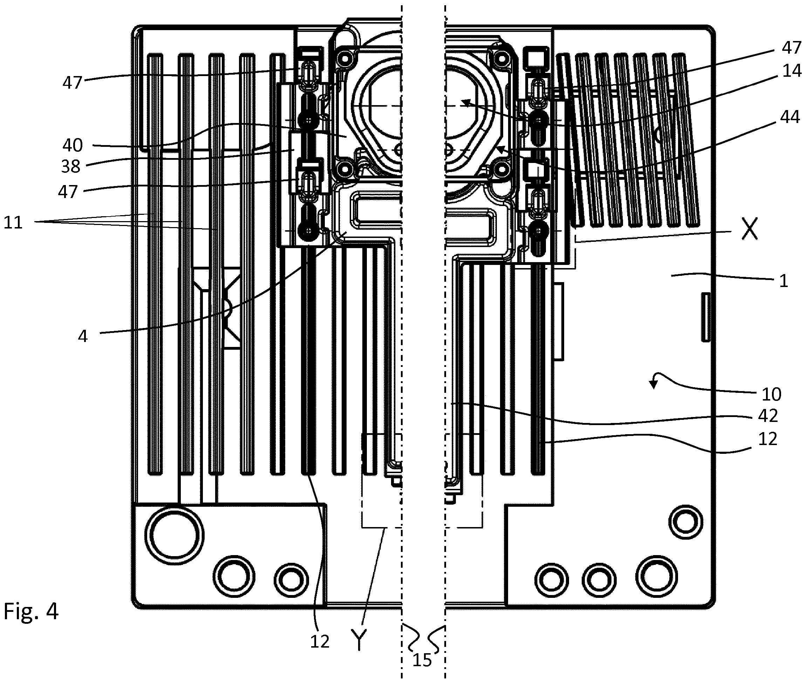

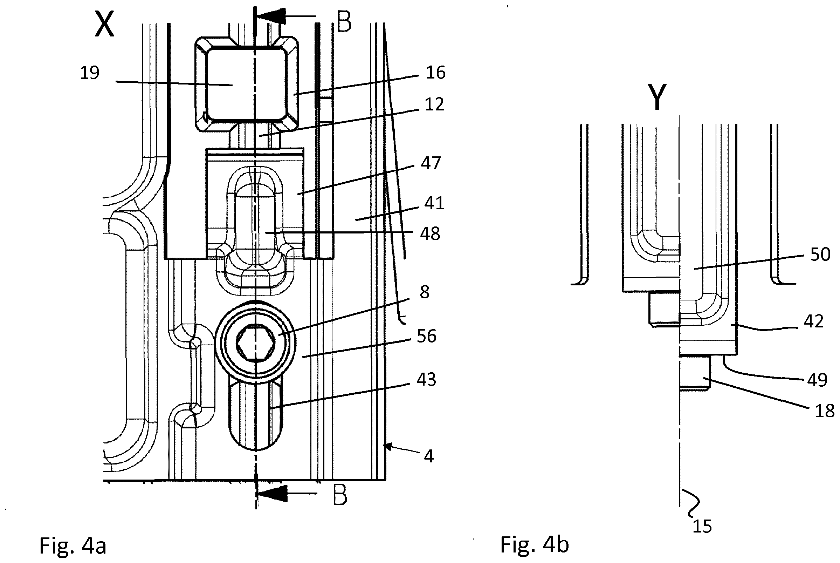

Figuren 4, 4a und 4b zeigen den Frequenzumrichter 1 mit Blick auf dessen Unterseite 10, an der das Verriegelungselement 4 relativ zum Elektromotor 2 bzw. seiner Montagebasis 3 beweglich gehalten ist. Figuren 4a und 4b zeigen jeweils vergrößerte Abschnitte des Verriegelungselements 4. Das Verriegelungselement 4 ist bezogen auf eine Längsachse 15 symmetrisch. Es ist durch ein flaches Blech gebildet, so dass es nur eine geringe Aufbauhöhe besitzt. Das Verriegelungselement 4 weist unterschiedliche Funktionsabschnitte auf, um verschiedene Aufgaben zu erfüllen. Es besitzt eine reliefartige Struktur, um sich einerseits an die verschiedenen Höhen der Unterseite 10 des Frequenzumrichters 1 und der Montagebasis 3 anzupassen und andererseits eine höhere Versteifung zu erreichen.

Das Verriegelungselement 4 umfasst einen Zentralabschnitt 40, der auf jeder Seite der Längsachse 15 in zwei zueinander beabstandete Außenabschnitte 56 übergeht. Von den Außenabschnitten 56 steht jeweils ein Verriegelungsabschnitt 47 ab, so dass insgesamt vier solcher Verriegelungsabschnitte 47 vorhanden sind. Alle Verriegelungsabschnitt 47 erstrecken sich parallel, insbesondere parallel zur Längsachse 15. Zur Erhöhung der Steifigkeit sind zwei Außenabschnitte 56 über jeweils einen Längssteg 41 miteinander verbunden.

Die Anordnung der Verriegelungsabschnitte 47 korrespondiert mit der Anordnung der Halteelemente 31. So haben die Verriegelungsabschnitt 47 denselben Abstand zur Längsachse 15 und denselben Abstand zueinander in Längsrichtung, wie die Halteelemente 31 zu Längsachse (Motorachse 21) der Montageplatte 3 und zueinander haben. Um mit den Halteabschnitten 31 zu interagieren, liegen die Verriegelungsabschnitte 47 unter Freilassung eines Freiraums 38 hintereinander, durch den jeweils ein Halteabschnitt 31 beim radialen Fügen hindurchtreten kann, um anschließend jenseits des Verriegelungselementes 4 zu liegen. Die beide Freiräume 38 sind somit jeweils zur Längsachse15 hin durch den Zentralabschnitt 40, nach vorn durch einen Außenabschnitt 56, zur Seite durch den Längssteg 41 und nach hinten durch einen Verriegelungsabschnitt 47 begrenzt.

Das Verriegelungselement 4 besitzt eine den Zentralabschnitt 40 begrenzende, zentrale Ausnehmung 44, durch die sich im montierten Zustand des Frequenzumrichters 1 auf dem Elektromotor 2 die elektrische Steckverbindung, insbesondere der Dom 35 der Montagebasis 3 hindurcherstreckt, siege Fig. 6. Neben bzw. vor der zentralen Ausnehmung 44 weist das Verriegelungselement 4 eine Anhöhe auf, um den Zentralabschnitt 40 zu versteifen. Die die zentrale Ausnehmung 44 zu den Seiten begrenzenden Seitenabschnitte 54 verbinden sich aus Sicht dieser Materialausnehmung 53 hinter der zentralen Ausnehmung 44 durch einen Quersteg 45 miteinander, um die Verdrehsteifigkeit des Verriegelungselements 4 zu erhöhen. Wie Figur 6 zeigt, weist das Verrieglungselement 4 in den Übergangsbereichen vom Zentralabschnitt 40 zu den Seitenabschnitten 54 sowie in den Übergangsbereichen von den Seitenabschnitten 54 zu dem Quersteg 45 eine längliche Erhöhung 57 auf, die durch die Kontur der Montagebasis 3 respektive die darunter befindlichen Motorschrauben 6 bedingt sind. Die Erhebungen 57 bilden an diesen Übergangsbereichen Schraubenabdeckungen, die aufgrund der Bewegung des Verriegelungselements4 über die Motorschrauben 6 hinweg länglich sind.

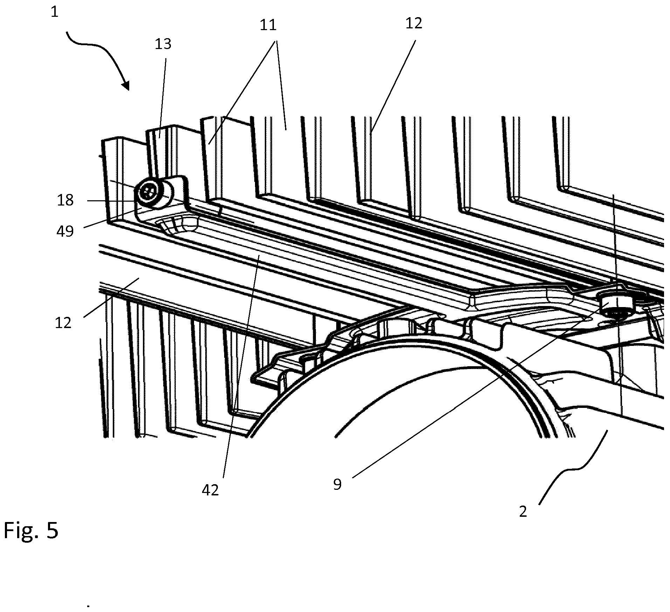

Die Unterseite 10 des Frequenzumrichters 1 besitzt mehrere längliche Kühlrippen 11, 12, 13, die sich in montiertem Zustand zum Elektromotor 2 hin erstrecken. Wie u.a. Figur 5 zeigt, liegt das Verriegelungselement 4 unterhalb der Kühlrippen 11, 12, 13. Die Halterung des Verriegelungselements 4 erfolgt an zwei der Kühlrippen, die als Haltekühlrippen 12 fungieren, mittels der Führungsschrauben 8. Die Führungsschrauben 8 erstrecken sich zu diesem Zweck jeweils durch eine längliche Ausnehmung 43 in einem Außenabschnitt 56 hindurch, hier in Gestalt eines Langlochs, und sind in Gewindebohrungen der entsprechenden Haltekühlrippe 12 eingeschraubt. Die länglichen Ausnehmungen 43 ermöglichen somit eine Linearbewegung des Verriegelungselements 4, während es am Frequenzumrichter 1 gehalten ist. Die Köpfe 55 der Führungsschrauben 8 sind auf Abstand zur Unterseite 10 des Frequenzumrichters 1 gehalten, so dass ein leichtes Spiel zwischen Verriegelungselement 4 und Frequenzumrichter 1 besteht.

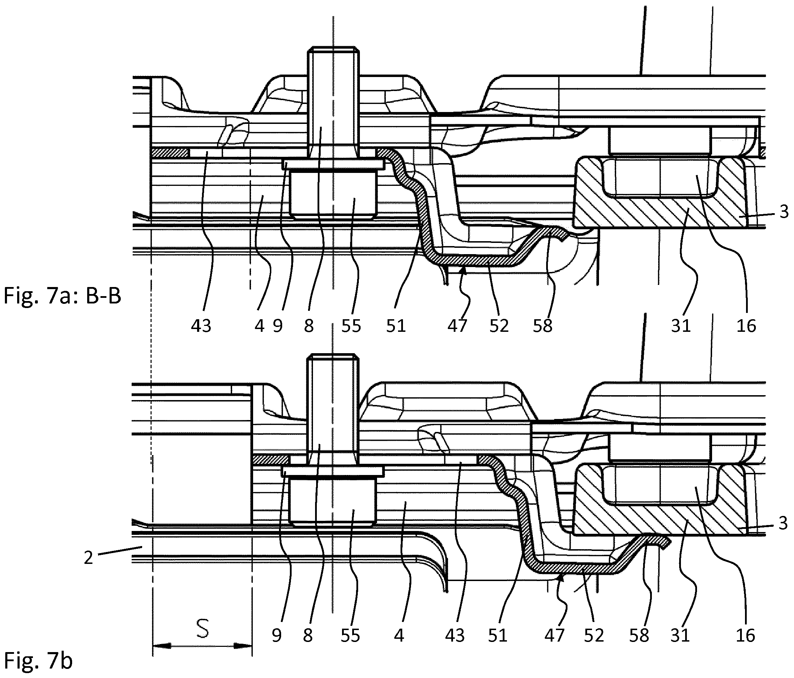

Die Führungsschrauben 8 liegen in der Freigabeposition an einem ersten, den Verriegelungsabschnitten 47 nahen Ende der länglichen Ausnehmungen 43, siehe Figuren 4a, 6 und 7a, und in der Verriegelungsposition am gegenüberliegenden zweiten, den Verriegelungsabschnitten 47 fernen Ende der länglichen Ausnehmungen 43, siehe Figur 7b, wobei die Führungsschrauben 8 beim Übergang von der Freigabe- zur Verriegelungsposition und umgekehrt innerhalb der länglichen Ausnehmungen 43 gleiten. Die länglichen Ausnehmungen 43 liegen in dieser Ausführungsvariante in einer Flucht mit den Verriegelungsabschnitten 47.

Auf der der zentralen Ausnehmung 44 gegenüberliegenden Seite des Zentralabschnitts 40 erstreckt sich ein Befestigungssteg 42 entlang der Längsachse 15 vom Zentralabschnitts 40 weg. Wie Figuren 4b und 5 erkennen lassen, ist das Kopfende 49 des Befestigungsstegs 42 rechtwinklig zur Längserstreckung des Stegs umgebogen und trägt die Arretierungsschraube 18. Die Arretierungsschraube 18 erstreckt sich durch eine Öffnung im Kopfende 49 hindurch und ist als unverlierbare Schraube ausgeführt, so dass sie nicht ohne Werkzeug vom Befestigungssteg 42 entfernt werden, insbesondere nicht versehentlich herabfallen kann. Figur 5 zeigt die Befestigung der Arretierungsschraube 18 an der axialen Stirnseite einer Befestigungskühlrippe 13 des Frequenzumrichters 1, entlang welcher sich der Befestigungsstegs 42 erstreckt. Wenigstens das axiale Ende dieser Kühlrippe 13 ist für die Aufnahme der Arretierungsschraube 18 dicker, als die anderen Kühlrippen 11, 12, insbesondere gegenüber dem übrigen Abschnitt der Kühlrippe 13 verdickt. Wie Figuren 4b und 5 zudem zeigen, weist der Befestigungssteg 42 eine zur reliefartigen Struktur beitragende Prägung 50 auf, um die Steifigkeit des Befestigungssteg 42 zu erhöhen.

Die Funktionsweise des erfindungsgemäßen Verriegelungsmechanismusses wird besonders an den Figuren 6, 7a und 7b deutlich.

Für die Montage des Frequenzumrichters 1 an oder auf dem Elektromotor 2 wird der Frequenzumrichter 1 zunächst radial zur Motorachse 21 auf den Elektromotor 2 gefügt, genauer gesagt, auf dessen Montagebasis 3 derart aufgesetzt, dass der Dom 35 mit der zentralen Ausnehmung 44 des Verriegelungselements 4 und die Füße 16 mit den Halteelementen 31 fluchten. In der Endposition durchragt der Dom 35 die zentrale Öffnung 44 und die Füße 16 liegen in den Ausnehmungen der Halteelemente 31 aufgenommen ein. Zum radialen Fügen befinden sich die Verriegelungsabschnitte 47 in der Freigabeposition, in der sie den Führungsschrauben 18 nah sind, wie dies in Figuren 6 dargestellt ist, in der der Frequenzumrichter 1 weggelassen sind. In der Freigabeposition fluchten die vorderen Halteabschnitte 31 mit den Freiräumen 38.

Wie Figuren 7a und 7b zeigen, sind die Verriegelungsabschnitte 47 jeweils L-förmig, d.h. durch zwei Schenkel 51, 52 gebildet. Ein erster Schenkel 51 geht an einem Ende in den Außenabschnitt 56 über und steht von diesem zum Elektromotor 2 hin ab. Ein zweiter Schenkel 52 schließt sich an den ersten Schenkel 51 an dessen anderem Ende an und ist zum entsprechenden Halteelement 31 gerichtet. Der zweite Schenkel 52 erstreckt sich parallel zur Längsachse 15 auf einer Höhe, die unterhalb der Halteabschnitt 31 liegt, so dass der zweite Schenkel 52 der Verriegelungsabschnitte 47 den jeweiligen Halteabschnitt 31 untergreifen kann. In beiden Schenkeln 51, 52 ist eine Prägung 48 vorhanden, um die Verriegelungsabschnitte 47 zu versteifen. Die zum jeweiligen Halteelement 31 gerichtete Vorderkante 58 der Verriegelungsabschnitte 47 ist in Richtung vom Verriegelungselement 4 weg umgebogen, um eine Rundung zu erhalten, die es vereinfacht, die Verriegelungsabschnitte 47 unter die Halteelemente 31 zu schieben.

Figur 7a zeigt die Verriegelungsabschnitte 47 in Freigabeposition, d.h. bei unverriegeltem Frequenzumrichter. Figur 7b zeigt die Verriegelungsabschnitte 47 in Verriegelungsposition, d.h. bei verriegeltem Frequenzumrichter 1. In dieser Position untergreifen bzw. hintergreifen die Verriegelungsabschnitte 47, genauer gesagt deren jeweiliger zweiter Schenkel 52, die Halteabschnitte 31, so dass die Verriegelungsabschnitte 47 zumindest teilweise in Fügerichtung F hinter den Halteelementen liegen und einen Formschluss bilden. Dies verhindert, dass der Frequenzumrichter 1 entgegen der Fügerichtung F wieder von der Montagebasis abgenommen werden kann.

Um die Verriegelungsabschnitte 47 von der Freigabeposition in die Verriegelungsposition zu bringen, wird das Verriegelungselement 4 um die Strecke S, siehe Figur 7b, entlang der Längsachse 15 in Richtung der Montagebasis 3 linear verschoben, so dass die Verriegelungsabschnitte 47 unter die Halteabschnitte 31 gelangen. Die Anordnung der Verriegelungsabschnitte 47 bezogen auf die Halteabschnitte 31 kann dabei derart sein, dass die Verriegelungsabschnitte 47 die Halteabschnitte 31 klemmend untergreifen, d.h. durch federnde L-förmige Klemmabschnitte gebildet sind. Somit besteht zwischen dem Verriegelungselement 4 und der Montagebasis 3 nicht nur ein Formschluss, sondern auch ein Kraftschluss.

Durch das Untergreifen kann der Winkel zwischen dem ersten und zweiten Schenkel 51, 52 etwas erweitert und/ oder zwischen dem ersten Schenkel 51 und dem Außenabschnitt 56 werden. Die Verriegelungsabschnitte 47 bilden somit federnde Klemmzungen.

Die lineare Verschiebung des Verriegelungselements 4 erfolgt durch Anziehen der Arretierungsschraube 18, vergleiche Figur 5, so dass das Verriegelungselement 4 bei Erreichen der finalen Verriegelungsposition direkt arretiert ist und nicht erst festgeschraubt werden muss. Die Befestigung des Frequenzumrichters 1 am Elektromotor 2 erfolgt somit durch eine einzige Schraube 18, was den Montageaufwand, insbesondere kundenseitig im Falle einer Wartung oder Reparatur, erheblich vereinfacht. Besonders hervorzuheben ist, dass das Verriegelungselement 4 mehrere räumlich voneinander getrennte Verrieglungen gleichzeitig bewirkt, obgleich nur eine einzige Schraubbefestigung erfolgt.

Um die erfindungsgemäße Verbindung zwischen Frequenzumrichter 1 und Elektromotor 2 zu entriegeln, ist lediglich die Arretierungsschraube 18 aus ihrem Sitz zu lösen und das Verriegelungselement 4 von der Montagebasis 3 zurückzuschieben. Um dies zu erleichtern kann der Quersteg 45 eine Stehfalz 46 aufweisen, gegen die mit einem entsprechenden Werkzeug gedrückt werden kann. Die Verrieglungsabschnitte 47 werden dabei zu den Führungsschrauben bewegt und geben die Halteabschnitte 31 frei, so dass der Frequenzumrichter 1 radial zur Motorachse 21 vom Elektromotor 2 abgekommen werden kann.

Figuren 8 bis 12 zeigen eine zweite Ausführungsvariante einer Anordnung, bei der der erfindungsgemäße Verriegelungsmechanismus realisiert ist, wobei nachfolgend lediglich die wesentlichen Unterschiede angesprochen werden. Bei dieser zweiten Ausführungsvariante sind der Frequenzumrichter 1 und der Elektromotor 2 vollständig dargestellt. So hat der Frequenzumrichter 1 ein vollständig geschlossenes Gehäuse mit einer Anzeige- und Bedieneinheit 59 (HMI) auf der dem Motor 2 abgewandten Seite, und bei dem Elektromotor 2 sind antriebsseitig die Motorwelle 26 und auf der gegenüberliegenden Seite ein Lüfter 28 dargestellt. Zudem ist der elektrische Steckkontakt 53 zwischen Elektromotor 2 und Frequenzumrichter 1 dargestellt.

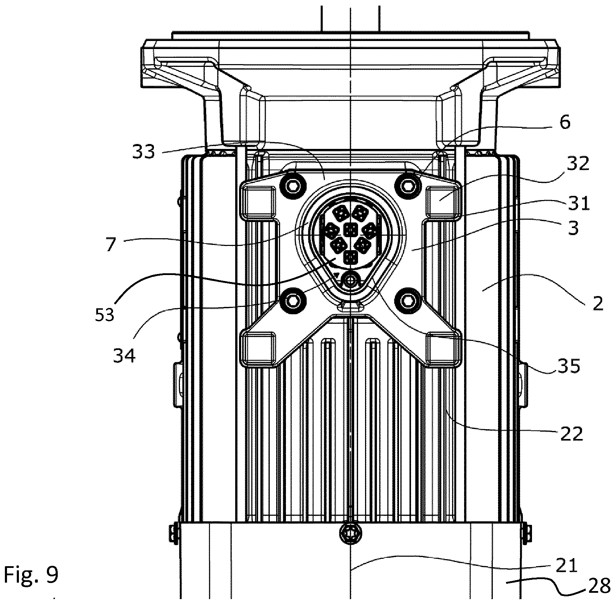

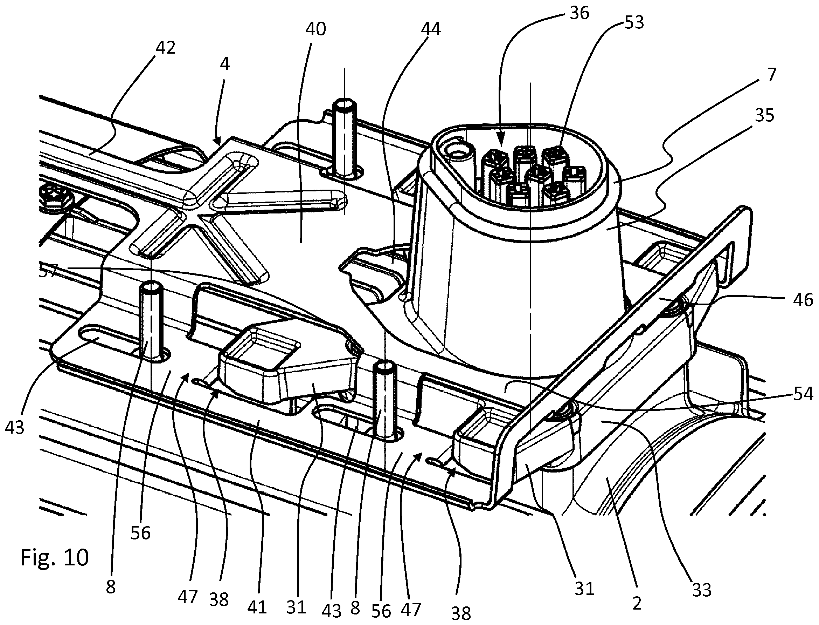

Wie insbesondere Fig. 9 zu erkennen gibt, erstrecken sich die lüfterseitigen Halteelemente 31 nicht ausschließlich quer zur Motorachse 21, sondern winklig hierzu, insbesondere im Winkel von etwa 45°. Sie sind demgemäß sowohl zur Seite als auch nach hinten zum Lüfter 28 gerichtet. Zudem ist die Basisplatte 33 dicker als im ersten Beispiel, wie Fig. 8 und 10 zeigen, so dass die Köpfe der Motorschrauben 6 vollständig in der Basisplatte 33 einliegen, d.h. nicht aus ihr hervorstehen. Es bedarf somit keiner Erhöhungen 57 in den Übergangsbereichen vom Zentralabschnitt 40 zu den Seitenabschnitten 54 sowie in den Übergangsbereichen von den Seitenabschnitten 54 zu dem Quersteg 45, um die Motorschrauben 6 zu überbrücken, vergleiche Fig. 6 und 10. Aufgrund der größeren Dicke der Basisplatte 33 sind die Füße 16 des Frequenzumrichters 1 länger, siehe Fig. 8.

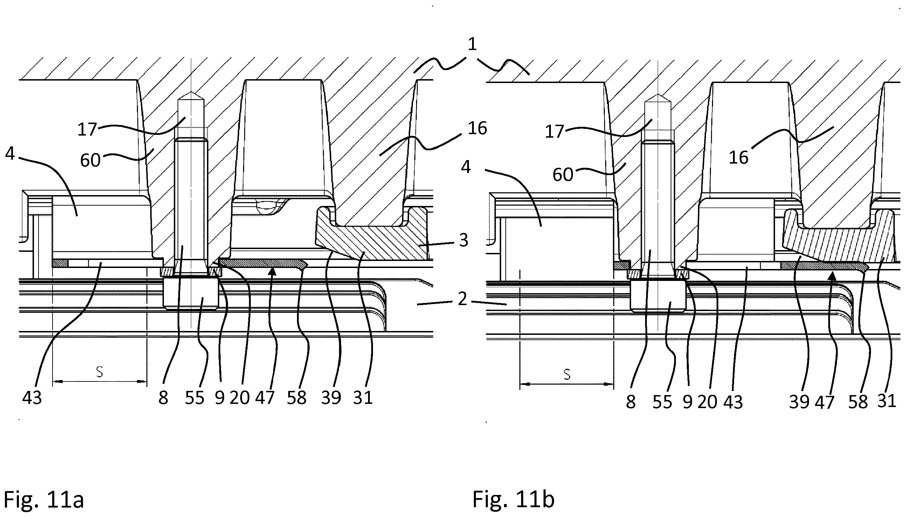

Ein wesentlicher Unterschied der zweiten Ausführungsvariante gegenüber der ersten Ausführungsvariante besteht darin, dass die Verriegelungsabschnitte 47 nicht durch L-förmige Klemmzungen gebildet sind. Sie bilden vielmehr zu einem Teil einen Bereich des jeweiligen Außenabschnitts 56 und stehen zu einem anderen Teil von diesem in Richtung des jeweiligen Halteelements 31 gerade ab. Die Vorderkante 58 des Verriegelungsabschnitts 47 ist etwas vom Halteabschnitt 31 weg gebogen, um den Verriegelungsabschnitt 47 leichter unter den Halteabschnitt 31 schieben zu können, siehe Fig. 11a und 11b. Wie Fig. 11a und 11b zudem zu erkennen geben, weisen die Halteabschnitte 31 unterseitig jeweils eine zum jeweiligen Verriegelungsabschnitt 47 gerichtete Abflachung 39 auf, an welcher der entsprechende Verriegelungsabschnitt 47 bei seiner Bewegung entlang gleitet und leicht nach unten gebogen wird, so dass ein Kraftschluss entsteht.

Weitere Unterschiede bestehen darin, dass die seitlichen Längsstege 41 am Ende in die Stehfalz 46 übergehen, die hier höher ausgebildet ist, und dass die Prägung im Zentralabschnitt 40 anders geformt ist, um die Versteifung zu erhöhen.

Im Unterschied zu den Fig. 7a und 7b ist in Fig. 11a und 11b der Frequenzumrichter dargestellt. Hieran wird deutlich, dass sich die Führungsschrauben 8 jeweils durch die längliche Ausnehmung 43 in einem Außenabschnitt 56 hindurch erstrecken, hier in Gestalt eines Langlochs, und in Gewindebohrungen 17 eingeschraubt sind. Die Gewindebohrungen 17 liegen hier jedoch nicht in der Halterippe 12, sondern in eigens dafür vorgesehenen Domen 60. Von der Unterseite der Dome 60 vorspringende, kreisrunde Erhebungen 20, deren Höhe größer ist, als die Dicke des Blechs, aus dem das Verrieglungselement 4 hergestellt ist, liegen in jeweils einer der länglichen Ausnehmungen 43 ein, vergleiche Figuren 11a, 11b. Die Köpfe 55 der Führungsschrauben 8 drücken die Unterlegscheiben 9 gegen die Erhöhungen 20, so dass der Abstand zwischen Unterlegscheibe 9 und Unterseite 10 des Frequenzumrichters 1 bzw. die Dicke der Erhöhungen 20 das Spiel definiert, innerhalb dem das Verriegelungselement 4 beweglich ist.

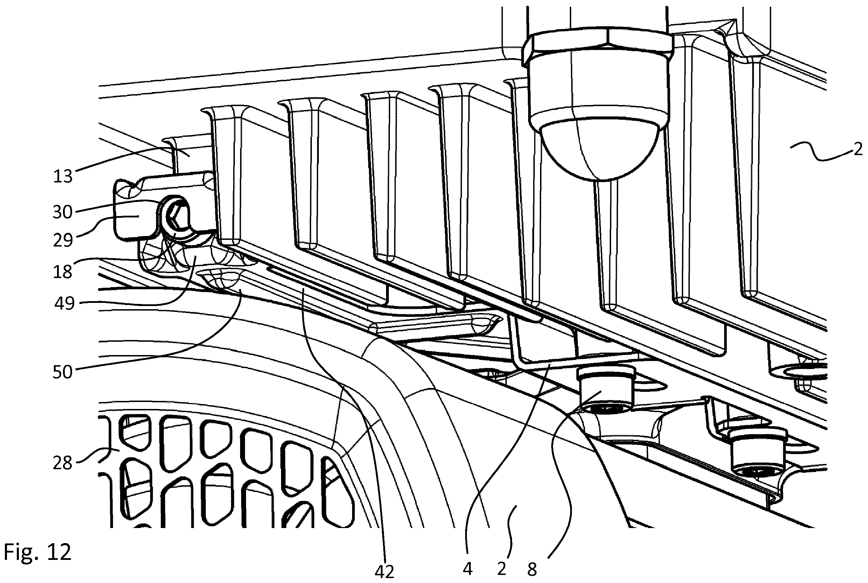

Fig. 12 zeigt analog zur Fig. 5 die Befestigung des Verriegelungselements 4 auf der Seite des Lüfters 28 des Elektromotors 1 an einer Kühlrippe 13, die hier gegenüber den übrigen Kühlrippen 11, 12 zurücksteht. Der Befestigungssteg 42 ist über das Kopfende 49 hinaus U-förmig verlängert, wobei die Arretierungsschraube 18 zwischen dem Kopfende 49 und einem Schild 29 des Befestigungsstegs 42 unverlierbar einliegt. Eine Öffnung 30 im Schild 29 ermöglicht den Zugang zu der Vertiefung im Schraubenkopf zur Aufnahme eines Drehmoment erzeugenden Werkzeugs.

Es sei darauf hingewiesen, dass die vorstehende Beschreibung lediglich beispielhaft zum Zwecke der Veranschaulichung gegeben ist und den Schutzbereich der Erfindung keineswegs einschränkt. Merkmale der Erfindung, die als "kann", "beispielhaft", "bevorzugt", "optional", "ideal", "vorteilhaft", "gegebenenfalls" oder "geeignet" angegeben sind, sind als rein fakultativ zu betrachten und schränken ebenfalls den Schutzbereich nicht ein, welcher ausschließlich durch die Ansprüche festgelegt ist. Soweit in der vorstehenden Beschreibung Elemente, Komponenten, Verfahrensschritte, Werte oder Informationen genannt sind, die bekannte, naheliegende oder vorhersehbare Äquivalente besitzen, werden diese Äquivalente von der Erfindung mit umfasst. Ebenso schließt die Erfindung jegliche Änderungen, Abwandlungen oder Modifikationen von Ausführungsbeispielen ein, die den Austausch, die Hinzunahme, die Änderung oder das Weglassen von Elementen, Komponenten, Verfahrensschritte, Werten oder Informationen zum Gegenstand haben, solange der erfindungsgemäße Grundgedanke erhalten bleibt, der durch die Ansprüche definiert wird, ungeachtet dessen, ob die Änderung, Abwandlung oder Modifikationen zu einer Verbesserung oder Verschlechterung einer Ausführungsform führt.

Beispielsweise muss die Montagebasis 3 nicht zwingend abnehmbar sein, Sie kann auch einstückig mit dem Gehäuse des Elektromotors 2 sein. Ferner kann das Verriegelungselement 4 auch derart ausgestaltet sein, dass es durch eine Drehbewegung in die Verriegelungsposition geschwenkt wird. Ferner kann sie Anordnung derart ausgebildet sein, dass das Verriegelungselement 4 am Motor 2 beweglich gehalten und die Halteabschnitte Teil des Frequenzumrichters 2 sind. Die Anzahl und Anordnung der Halteabschnitte kann grundsätzlich beliebig sein, wobei es mindestens drei sein sollten und ihre Anordnung symmetrisch sein sollte. In entsprechender Weise kann die Anzahl und Anordnung der Verriegelungsabschnitte grundsätzlich beliebig sein, wobei die Anzahl und Anordnung mit der Anzahl und Anordnung der Halteabschnitte korrespondieren muss.

Obgleich die vorstehende Erfindungsbeschreibung eine Vielzahl körperlicher, unkörperlicher oder verfahrensgegenständlicher Merkmale in Bezug zu einem oder mehreren konkreten Ausführungsbeispiel(en) nennt, so können diese Merkmale auch isoliert von dem konkreten Ausführungsbeispiel verwendet werden, jedenfalls soweit sie nicht das zwingende Vorhandensein weiterer Merkmale erfordern. Umgekehrt können diese in Bezug zu einem oder mehreren konkreten Ausführungsbeispiel(en) genannten Merkmale beliebig miteinander sowie mit weiteren offenbarten oder nicht offenbarten Merkmalen von gezeigten oder nicht gezeigten Ausführungsbeispielen kombiniert werden, jedenfalls soweit sich die Merkmale nicht gegenseitig ausschließen oder zu technischen Unvereinbarkeiten führen.

### Bezugszeichenliste

- 1: Frequenzumrichter, Gehäuseteil
- 2: Elektromotor, Motorgehäuse
- 3: Montagebasis, Motoradapter
- 4: Verriegelungselement
- 5: Motordichtung
- 6: Motorschrauben
- 7: Gehäusedichtung
- 8: Führungsschrauben
- 9: Unterlegscheibe
- 10: Unterseite Gehäuseteil
- 11: Kühlrippe
- 12: Haltekühlrippe
- 13: Befestigungskühlrippe
- 14: Anschlussöffnung
- 15: Längssachse
- 16: Fuß
- 17: Bohrung
- 18: Arretierungsschraube
- 19: Anlagefläche
- 20: Erhebung
- 21: Motorachse
- 22: Kühlrippe
- 23: Klemmenkasten
- 24: Anschlussöffnung
- 25: Innenwand
- 26: Welle
- 27: Gewindebohrungen
- 28: Lüfter
- 29: Schild
- 30: Ausnehmung
- 31: Halteabschnitt, seitlich abstehend Erweiterung, bildet Aufnahmesockel
- 32: Vertiefung
- 33: Basisplatte
- 34: Anschlussöffnung
- 35: Dom
- 36: Schacht
- 37: Bohrung
- 38: Freiraum
- 39: Abflachung
- 40: Zentralabschnitt
- 41: Längssteg
- 42: Befestigungssteg
- 43: Ausnehmung, Langloch
- 44: Zentrale Ausnehmung
- 45: Quersteg
- 46: Stehfalz
- 47: Verriegelungsabschnitt
- 48: Prägung im Verriegelungsabschnitt
- 49: Kopfende
- 50: Prägung im Befestigungssteg
- 51: Erster Schenkel
- 52: Zweiter Schenkel
- 53: Steckkontakt
- 54: Seitenabschnitt
- 55: Schraubenkopf
- 56: Außenabschnitt
- 57: Erhöhung, Schraubenabdeckung
- 58: Vorderkante des Verriegelungsabschnitts
- 59: Anzeige- und Bedieneinheit
- 60: Dom für Gewindebohrung 17

## Patentansprüche

1. Anordnung umfassend einen Frequenzumrichter (1) und einen Elektromotor (3), auf dem der Frequenzumrichter (1) in einer Fügerichtung (F) montiert ist, und wenigstens ein Befestigungselement (4) zur lösbaren Befestigung des Frequenzumrichters (1) am Elektromotor (2), wobei das Befestigungselement (4) ein zwischen dem Frequenzumrichter (1) und dem Elektromotor (2) liegendes Verriegelungselement (4) mit wenigstens zwei räumlich voneinander getrennten Verriegelungsabschnitten (47) ist, wobei das Verriegelungselement (4) mitsamt der Verriegelungsabschnitte (47) in einer Ebene quer zur Fügerichtung (F) von einer Freigabeposition in eine Verriegelungsposition bewegbar ist, in der die Verriegelungsabschnitte (47) den Frequenzumrichter (1) am Elektromotor (2) halten, **dadurch gekennzeichnet, dass** das Verriegelungselement (4) über wenigstens zwei Führungsschrauben (8) bewegbar gehalten ist, die sich jeweils durch eine längliche Ausnehmung (43) im Verriegelungselement (4) hindurcherstrecken und deren Köpfe (55) das Verriegelungselement (4) derart am Frequenzumrichter (1) oder Elektromotor (2) halten, dass es nur in der Ebene quer zur Fügerichtung (F) bewegbar ist.

2. Anordnung nach Anspruch 1, **dadurch gekennzeichnet, dass** das Verriegelungselement (4) beweglich am Frequenzumrichter (1) oder Elektromotor (2) gehalten ist.

3. Anordnung nach Anspruch 1 oder 2, **dadurch gekennzeichnet, dass** die Führungsschrauben (8) in eine oder jeweils eine Kühlrippe (12) eingeschraubt sind.

4. Anordnung nach einem der vorherigen Ansprüche, **dadurch gekennzeichnet, dass** das Verriegelungselement (4) linear verschiebbar oder drehbar ist.

5. Anordnung nach einem der vorherigen Ansprüche, **dadurch gekennzeichnet, dass** das Verriegelungselement (4) flach ist, vorzugsweise durch eine Platte, insbesondere ein Blech gebildet ist.

6. Anordnung nach einem der vorherigen Ansprüche, **dadurch gekennzeichnet, dass** das Verriegelungselement (4) zumindest bereichsweise eine reliefartige Struktur besitzt.

7. Anordnung nach einem der vorherigen Ansprüche, **dadurch gekennzeichnet, dass** die Verriegelungsabschnitte (47) L-förmige Klemmabschnitte, insbesondere Klemmzungen (47) sind, die Halteabschnitte (31) federnd hintergreifen.

8. Anordnung nach einem der vorherigen Ansprüche, **dadurch gekennzeichnet, dass** der Elektromotor (2) eine fest montierte, abnehmbare Montagebasis (3) aufweist und die Verriegelungsabschnitte (47) den Frequenzumrichter (1) in der Verriegelungsposition an der Montagebasis (4) halten.

9. Anordnung nach Anspruch 7 und 8, **dadurch gekennzeichnet, dass** die Halteabschnitte (31) Teil der Montagebasis (4) sind und Auflagepunkte für den Frequenzumrichter (1) bilden.

10. Anordnung zumindest nach einem der Ansprüche 7 oder 9, **dadurch gekennzeichnet, dass** die Halteabschnitte (31) jeweils eine Vertiefung (32) aufweisen, in der ein entsprechender Fuß (16) des Frequenzumrichters (1) aufgenommen ist.

11. Anordnung nach einem der vorherigen Ansprüche, **dadurch gekennzeichnet, dass** das Verriegelungselement (4) drei oder vier symmetrisch angeordnete Verriegelungsabschnitte (47) aufweist.

12. Anordnung nach einem der vorherigen Ansprüche, **dadurch gekennzeichnet, dass** das Verriegelungselement (4) mittels einer Arretierungsschraube (18) beabstandet zu den Verriegelungsabschnitten (47) fixierbar ist, insbesondere an einer Stirnseite einer Kühlrippe (13).

13. Anordnung nach Anspruch 12, **dadurch gekennzeichnet, dass** sich die Arretierungsschraube (18) in Bewegungsrichtung des Verriegelungselements (4) derart erstreckt, dass das Verriegelungselement (4) durch das Anziehen der Arretierungsschraube (18) in die Verriegelungsposition bewegt wird.

14. Anordnung nach Anspruch 12 oder 13, **dadurch gekennzeichnet, dass** Verriegelungselement (4) an derselben Komponente (1, 2) fixierbar ist, an der es beweglich gehalten ist.

## Claims

1. Arrangement comprising a frequency converter (1) and an electric motor (3) on which the frequency converter (1) is mounted in a joining direction (F), and at least one fastening element (4) for the detachable fastening of the frequency converter (1) on the electric motor (2), in which the fastening element (4) is a locking element (4) lying between the frequency converter (1) and the electric motor (2) with at least two physically separate locking sections (47), in which the locking element (4) along with the locking sections (47) is moveable in a plane transverse to the joining direction (F) from a release position to a locking position where the locking sections (47) hold the frequency converter (1) on the electric motor (2), **characterised by** the locking element (4) being moveable via at least two guide screws (8) respectively extending through an elongated opening (43) in the locking element (4), the heads of which (55) hold the locking element (4) on the frequency converter (1) or electric motor (2) so that it is only moveable in the plane transverse to the joining direction (F).

2. Arrangement according to claim 1, **characterised by** the locking element (4) being held on the frequency converter (1) or electric motor (2) so that it is moveable.

3. Arrangement according to claim 1 or 2, **characterised by** the guide screws (8) being screwed into one or respectively one cooling fin (12).

4. Arrangement according to one of the preceding claims, **characterised by** a linear sliding or rotating capacity of the locking element (4).

5. Arrangement according to one of the preceding claims, **characterised by** the locking element (4) being flat, preferably formed by a plate, notably a sheet.

6. Arrangement according to one of the preceding claims, **characterised by** the locking element (4) having a relief-like structure, at least in partial areas.

7. Arrangement according to one of the preceding claims, **characterised by** the locking sections (47) being L-shaped clamping sections, notably clamping lugs (47) that engage behind holding sections (31) with spring force.

8. Arrangement according to one of the preceding claims, **characterised by** the electric motor (2) having a firmly mounted, removable mounting base (3) and the locking sections (47) holding the frequency converter (1) in the locking position on the mounting base (4).

9. Arrangement according to claim 7 and 8, **characterised by** the holding sections (31) being part of the mounting base (4) and forming support points for the frequency converter (1).

10. Arrangement according to at least one of the claims 7 or 9, **characterised by** the holding sections (31) respectively having a recess (32) that receives a corresponding foot (16) of the frequency converter (1).

11. Arrangement according to one of the preceding claims, **characterised by** the locking element (4) having three or four symmetrically arranged locking sections (47).

12. Arrangement according to one of the preceding claims, **characterised by** the ability to fix the locking element (4) by means of a retaining screw (18) at a distance to the locking sections (47), notably on a face end of a cooling fin (13).

13. Arrangement according to claim 12, **characterised by** the retaining screw (18) extending in the movement direction of the locking element (4) so that the locking element (4) is moved to the locking position by tightening the retaining screw (18).

14. Arrangement according to claim 12 or 13, **characterised by** the ability to fix the locking element (4) on the same component (1, 2) on which it is held so it is moveable.

## Revendications

1. Disposition comprenant un convertisseur de fréquence (1) et un moteur électrique (3) sur lequel le convertisseur de fréquence (1) est monté dans une direction de jonction (F), et au moins un élément de fixation (4) pour fixer de manière détachable le convertisseur de fréquence (1) au moteur électrique (2), sachant que l'élément de fixation (4) est un élément de verrouillage (4) situé entre le convertisseur de fréquence (1) et le moteur électrique (2) et comportant au moins deux sections de verrouillage (47) séparées spatialement l'une de l'autre, et que l'élément de verrouillage (4), conjointement avec les sections de verrouillage (47), est mobile dans un plan transversal à la direction de jonction (F) d'une position de libération à une position de verrouillage dans laquelle les sections de verrouillage (47) maintiennent le convertisseur de fréquence (1) sur le moteur électrique (2), **caractérisée en ce que** l'élément de verrouillage (4) est maintenu mobile par au moins deux vis de guidage (8), dont chacune s'étend à travers un évidement allongé (43) dans l'élément de verrouillage (4) et dont les têtes (55) retiennent l'élément de verrouillage (4) de telle façon sur le convertisseur de fréquences (1) ou le moteur électrique (2) qu'il ne peut être bougé que dans le plan transversal à la direction de jonction (F).

2. Disposition selon la revendication 1, **caractérisée en ce que** l'élément de verrouillage (4) est maintenu de manière mobile sur le convertisseur de fréquences (1) ou le moteur électrique (2).

3. Disposition selon la revendication 1 ou 2, **caractérisée en ce que** les vis de guidage (8) sont vissées dans une ou chacune des ailettes de refroidissement (12).

4. Disposition selon l'une des revendications précédentes, **caractérisée en ce que** l'élément de verrouillage (4) est rotatif ou déplaçable linéairement.

5. Disposition selon l'une des revendications précédentes, **caractérisée en ce que** l'élément de verrouillage (4) est plat et de préférence formé par une plaque, plus particulièrement une tôle.

6. Disposition selon l'une des revendications précédentes, **caractérisée en ce que** l'élément de verrouillage (4) présente au moins dans certaines zones une structure en relief.

7. Disposition selon l'une des revendications précédentes, **caractérisée en ce que** les sections de verrouillage (47) sont des sections de blocage en forme de L, plus particulièrement des languettes de blocage (47), s'engageant élastiquement derrière les sections de retenue (31).

8. Disposition selon l'une des revendications précédentes, **caractérisée en ce que** le moteur électrique (2) présente une base de montage (3) fixe et amovible sur laquelle les sections de verrouillage (47) maintiennent le convertisseur de fréquences (1) en position de verrouillage.

9. Disposition selon les revendications 7 et 8, **caractérisée en ce que** les sections de retenue (31) font partie de la base de montage (4) et forment de points d'appui pour le convertisseur de fréquences (1).

10. Disposition selon au moins l'une des revendications 7 ou 9, **caractérisée en ce que** les sections de retenue (31) présentent chacune une cavité (32) recevant un pied (16) correspondant du convertisseur de fréquences (1).

11. Disposition selon l'une des revendications précédentes, **caractérisée en ce que** l'élément de verrouillage (4) présente trois ou quatre sections de verrouillage (47) disposées symétriquement.

12. Disposition selon l'une des revendications précédentes, **caractérisée en ce que** l'élément de verrouillage (4) peut être fixé à une certaine distance des sections de verrouillage (47) au moyen d'une vis de blocage (18), notamment sur la face avant d'une ailette de refroidissement (13).

13. Disposition selon la revendication 12, **caractérisée en ce que** la vis de blocage (18) est étendue dans la direction du mouvement de l'élément de blocage (4) de telle sorte que le serrage de la vis de blocage (18) déplace en position de verrouillage l'élément de verrouillage (4).

14. Disposition selon la revendication 12 ou 13, **caractérisée en ce que** l'élément de verrouillage (4) peut être fixé au même composant (1, 2), auquel il est maintenu de manière mobile.
